# EUROPÄISCHE PATENTSCHRIFT

(11) **EP 2 957 659 B1**
(45) Veröffentlichungstag und Bekanntmachung des Hinweises auf die Patenterteilung: **20.02.2019**
(21) Anmeldenummer: 14172465.8
(22) Anmeldetag: 16.06.2014
(51) Int. Cl.: C25B 11/03, C25B 9/10, C25B 9/20

(54) **Gasdiffusionsschicht, PEM-Elektrolysezelle mit einer solchen Gasdiffusionsschicht sowie Elektrolyseur**
Gas diffusion layer, PEM electrolysis cell with such a gas diffusion layer and electrolyser
Couche de diffusion de gaz, cellule électrolytique PEM équipée d'une telle couche de diffusion de gaz, ainsi qu'électrolyseur

(43) Veröffentlichungstag der Anmeldung: 23.12.2015
(73) Patentinhaber: Siemens Aktiengesellschaft, 80333 München (DE)
(72) Erfinder: Hahn, Alexander, 91341 Röttenbach (DE); Spies, Alexander, 91052 Erlangen (DE); Straub, Jochen, 91054 Erlangen (DE)

(56) Entgegenhaltungen:
- WO-A1-2013/137470
- WO-A2-2004/036677
- JP-A- 2004 244 676
- US-A- 4 639 303
- US-A1- 2003 188 966
- US-A1- 2007 020 505

## Beschreibung

Die Erfindung betrifft eine Gasdiffusionsschicht für eine PEM-Elektrolysezelle. Die Erfindung betrifft weiterhin eine PEM-Elektrolysezelle mit einer solchen Gasdiffusionsschicht sowie einen Elektrolyseur.

Elektrochemische Zellen sind allgemein bekannt und werden unterteilt in galvanische Zellen und Elektrolysezellen. Eine Elektrolysezelle ist eine Vorrichtung, bei der ein elektrischer Strom eine chemische Reaktion erzwingt, wobei zumindest ein Teil von elektrischer Energie in chemische Energie umgewandelt wird. Eine galvanische Zelle ist eine - zur Elektrolysezelle - komplementäre Vorrichtung zur spontanen Umwandlung von chemischer in elektrische Energie. Eine bekannte Vorrichtung einer solchen galvanischen Zelle ist z.B. eine Brennstoffzelle.

Die Spaltung von Wasser durch elektrischen Strom zur Produktion von Wasserstoff- und Sauerstoffgas mittels einer Elektrolysezelle ist hinlänglich bekannt. Es wird dabei hauptsächlich zwischen zwei technischen Systemen, der alkalischen Elektrolyse und der PEM(Proton-Exchange-Membrane)-Elektrolyse, unterschieden.

Das Kernstück einer technischen Elektrolyseanlage ist die Elektrolysezelle, umfassend zwei Elektroden und einen Elektrolyten. In einer PEM-Elektrolysezelle besteht der Elektrolyt aus einer protonenleitenden Membran, auf welcher sich beidseitig die Elektroden befinden. Die Einheit aus Membran und Elektroden wird als MEA (engl. Membrane-Electrode-Assembly, dt. Membran-Elektroden-Einheit) bezeichnet. Die Elektroden werden im zusammengebauten Zustand eines Elektrolyse-Stacks aus mehreren Elektrolysezellen über eine Gasdiffusionsschicht von so genannten Bipolarplatten kontaktiert, wobei die Bipolarplatten die einzelnen Elektrolysezellen des Stacks voneinander trennen. Dabei entspricht die O₂-Seite der Elektrolysezelle dem Pluspol und die H₂-Seite dem Minuspol, getrennt durch die dazwischen liegende Membran-Elektroden-Einheit.

Die PEM-Elektrolysezelle wird auf der O₂-Seite mit voll entsalztem Wasser gespeist, das an der Anode in Sauerstoffgas und Protonen (H⁺) zerlegt wird. Die Protonen wandern durch die Elektrolytmembran und rekombinieren an der Kathode (H2-Seite) zu Wasserstoffgas. Die an den Elektroden anliegende Gasdiffusionsschicht gewährleistet neben der Elektrodenkontaktierung die optimale Wasserverteilung (und damit die Benetzung der Membran) sowie den Abtransport der Produktgase. Benötigt wird daher als Gasdiffusionsschicht ein elektrisch leitendes, poröses Element mit guter dauerhafter Kontaktierung der Elektrode. Als zusätzliche Anforderung sollen ggf. im Elektrolyseur entstehende Bautoleranzen ausgeglichen werden, um eine gleichmäßige Kontaktierung der MEA in jedem Toleranzfall zu ermöglichen.

Bisher wurden in der Regel gesinterte Metallscheiben als Gasdiffusionsschicht eingesetzt. Diese erfüllen zwar die Forderungen nach elektrischer Leitfähigkeit und Porosität, ein zusätzlicher Toleranzausgleich der Bauteile der Elektrolysezelle auf beiden Seiten der Gasdiffusionsschicht ist jedoch nicht möglich. Zudem sind die Fertigungskosten für solche Scheiben vergleichsweise hoch und es liegt bezüglich der Größe bedingt durch die benötigten Pressdrücke bei der Fertigung derartiger Scheiben eine Größenbeschränkung vor. Darüber hinaus entstehen bei großen Bauteilen Verzugsprobleme, die nur schwer kontrollierbar sind.

Der Einsatz von Gasdiffusionselektroden mit federenden Elementen zur Herstellung eines elektrischen Kontakts bei alkalischen Elektrolyseuren ist z.B. in der WO 2007/080193 A2 und der EP 2436804 A1 beschrieben.

Aus der EP 1378589 B1 geht ein Federblech hervor, bei dem die einzelnen Federelemente abwechselnd nach oben und nach unten gebogen sind. Das Federblech wird lediglich kathodenseitig in einem Ion-Austausch-Elektrolyseur eingebaut, so dass das Federblech direkt die Kathoden kontaktiert.

US 2003/188966 A1 beschreibt eine weitere Federkomponente für eine Elektrolysezelle, die zwischen einer Trennwand und einer Kathode angeordnet ist. Die Federkomponente umfasst eine Vielzahl von Blattfederelementen, die zum gleichmäßigen Anpassen an der Kathode anliegen.

Weitere, unterschiedlich aufgebaute Gasdiffusionselektroden sind in der WO 2002035620 A2, der DE 10027339 A1 und DE 102004023161 A1 beschrieben.

Der Erfindung liegt die Aufgabe zugrunde, eventuell entstehende Bauteil-Toleranzen in einer Elektrolysezelle, insbesondere im Bereich der Bipolarplatten, auszugleichen.

Die Aufgabe wird erfindungsgemäß gelöst durch eine Gasdiffusionsschicht zum Anbringen zwischen einer Bipolarplatte und einer Elektrode einer PEM-Elektrolysezelle, umfassend mindestens zwei übereinander geschichtete Lagen, wobei eine äußere Lage als eine Federkomponente ausgebildet ist, die eine progressive Federkennlinie aufweist.

Die Aufgabe wird weiterhin erfindungsgemäß gelöst durch eine PEM-Elektrolysezelle mit einer solchen Gasdiffusionsschicht.

Die Aufgabe wird weiterhin erfindungsgemäß gelöst durch einen Elektrolyseur mit einer solchen PEM-Elektrolysezelle.

Die in Bezug auf die Gasdiffusionsschicht nachfolgend aufgeführten Vorteile und bevorzugten Ausgestaltungen lassen sich sinngemäß auf die PEM-Elektrolysezelle und dem Elektrolyseur übertragen.

Die Erfindung basiert auf der Erkenntnis, dass durch ein progressives Federverhalten gewährleistet wird, dass der Anpressdruck in allen Toleranzlagen der anliegenden Bauteile ausreichend ist. Die Implementierung eines progressiven Federverhaltens in eine Gasdiffusionsschicht erfolgt dabei durch die Geometrie der Federkomponente.

Unter Federkomponente wird eine Schicht oder Lage der Gasdiffusionsschicht verstanden, die ein elastisch rückstellendes Verhalten aufweist, d.h. unter Belastung nachgibt und nach Entlastung in die ursprüngliche Gestalt zurückkehrt.

Eine Federkennlinie zeigt den Kraft-Weg-Verlauf einer Feder, d.h. die Federkennlinie trifft in Form eines Diagramms eine Aussage darüber, wie effizient das Kraft-Weg-Verhältnis einer Feder ist. Eine progressive Federkennlinie weist die Eigenschaft auf, dass sie bei gleichmäßigen Belastungsschritten immer kleinere Schritte am Federweg zeigt. Bei der progressiven Kennlinie erhöht sich der eingesetzte Kraftaufwand im Verhältnis zum zurückgelegten Weg. Als Alternativen dazu gibt es die lineare und die degressive Federkennlinie.

Unter "äußere Lage" wird hierbei verstanden, dass bei mehr als zwei Lagen eine äußere, insbesondere direkt an die Bipolarplatte angrenzende Lage als eine Federkomponente mit einer progressiven Federkennlinie ausgebildet ist.

Der Einsatz einer Federkomponente mit einer progressiven Federkennlinie als Gasdiffusionsschicht weist die wesentlichen Vorteile auf, dass im Bereich der normalen Anpresskraft (ca. 5-25 bar) große Verformungen der Federkomponente erreicht werden, so dass große Bauteiltoleranzen ausgeglichen werden; bei Überlast ist wiederum der zusätzliche Federweg gering, so dass die Federkomponente großen Drücken standhält. Somit wird bei einer Last deutlich über dem Betriebsanpressdruck eine zu große plastische Verformung vor der Federkomponente verhindert.

Die Federung dient zum einen der Herstellung der elektrischen Kontaktierung zwischen der MEA und der Bipolarplatte, welche bereits bei einem geringen Anpressdrück gewährleistet ist. Zum anderen wird durch den Anpressdruck eine gleichmäßige und flächige Kontaktierung zur MEA sichergestellt. Je nach konstruktiver Ausprägung erfolgt durch die Federkomponente eine Vorverteilung des einströmenden Wassers. Weiterhin ist über die Federkomponente der elektrische Stromfluss gegeben.

Bevorzugt unterscheiden sich die mindestens zwei übereinander geschichteten Lagen bezüglich ihres Aufbaus und/oder Zusammensetzung voneinander. Dies ist insbesondere durch die Funktionalität der Lagen bedingt. Bei einem zwei-lagigen Aufbau der Gasdiffusionsschicht liegt die eine Lage auf der Bipolarplatte und die andere liegt auf einer Elektrode auf. Entsprechend unterschiedlich sind die Eigenschaften und somit die Konstruktion bzw. Zusammensetzung beider Lagen. Gleiches gilt, wenn zwischen den beiden äußeren Lagen eine oder mehrere Zwischenlagen sind. Ziel hierbei ist, dass jede dieser Lagen eine der Funktionen der Gasdiffusionsschicht übernimmt.

Vorteilhafterweise umfasst die Gasdiffusionsschicht drei Lagen: eine Kontaktierungskomponente, eine Diffusionskomponente und die Federkomponente. Die innere Kontaktierungskomponente dient zur gleichmäßigen Kontaktierung der Gasdiffusionsschicht an die Elektrode. Daher empfiehlt sich der Einsatz von feinen Materialien wie z.B. Vlies oder sehr fein perforiertem Blech. Die mittlere Diffusionskomponente dient dem Abtransport von entstehendem Gas, wobei auch der gesamte elektrische Stromfluss diese Komponente passiert. Die äußere Federkomponente gewährleistet, wie bereits erläutert, an erster Stelle einen möglichst stabilen Anpressdruck unabhängig von der Toleranzlage der angrenzenden Bauteile.

Im Hinblick auf eine besonders hohe Flexibilität der Federkomponente, die den Anforderungen beim Einsatz zum Toleranzausgleich erfüllt, ist die Federkomponente derart ausgestaltet, dass die Federkennlinie in mindestens zwei, insbesondere drei Bereiche mit unterschiedlichem Verlauf unterteilbar ist. Die Federkomponente ist dabei im Bereich des größten Anpressdrucks durch eine maximale elastische Verformung gekennzeichnet. Unter maximaler elastischer Verformung wird hierbei die Grenze zwischen einem elastischen und rein plastischen Verhalten der Federkomponente verstanden. Ein teil-elastisches und teil-plastisches Verhalten der Federkomponente fällt hierbei ebenfalls unter der maximalen elastischen Verformung. Insbesondere ist der maximale elastische Verformungsweg der Federkomponente bei einem Anpressdruck von ca. 50 bar erreicht. Über ca. 50 bar verhält sich die Feder rein plastisch, d.h. die Verformung bei dieser Last und darüber ist irreversibel.

Im Hinblick auf einen schnellen Ausgleich von Bauteiltoleranzen ist die Federkomponente bevorzugt derart ausgestaltet, dass bei einem Anpressdruck bis 5 bar eine Verformung der Federkomponente vorliegt, die bis 60%, insbesondere bis 80% bezogen auf die maximale elastische Verformung beträgt.

Zudem ist die Federkomponente vorzugsweise derart ausgestaltet, dass bei einem Anpressdruck zwischen 5 bar und 25 bar eine Verformung der Federkomponente (12a, 12b, 12c) vorliegt, die zwischen 60% und 90% bezogen auf eine maximale elastische Verformung beträgt.

Zweckdienlicher weise ist die Federkomponente aus einem elektrisch leitfähigen Material gebildet, insbesondere aus Edelstahl, Titan, Niob, Tantal und/oder Nickel. Eine solche Zusammensetzung der Federkomponente ermöglicht insbesondere ihren Einsatz als Stromverteiler.

Nach einer ersten bevorzugten Ausgestaltung ist die Federkomponente nach Art eines profilierten Blechs ausgebildet. Eine solche Ausgestaltung zeichnet sich durch eine vergleichsweise leichte Herstellung aus.

Nach einer alternativen bevorzugten Ausgestaltung ist die Federkomponente nach Art eines Geflechts ausgebildet. Hierbei können durch die Art und Dichte des Geflechts die Federeigenschaften einfach variiert werden.

Bevorzugt umfasst die Federkomponente eine oder mehrere Spiralen. Die Federeigenschaften werden dabei durch die Gestaltung und Anordnung der Spiralen definiert.

Ausführungsbeispiele der Erfindung lassen sich anhand einer Zeichnung erläutern. Hierin zeigen:
- FIG 1: den prinzipiellen Aufbau einer PEM-Elektrolysezelle,
- FIG 2: progressive Federkennlinien,
- FIG 3: eine Seitenansicht auf eine erste Ausführungsform einer Federkomponente einer Gasdiffusionsschicht,
- FIG 4: eine Draufsicht auf die erste Ausführungsform einer Federkomponente einer Gasdiffusionsschicht,
- FIG 5: eine Seitenansicht auf eine zweite Ausführungsform einer Federkomponente einer Gasdiffusionsschicht,
- FIG 6: eine Draufsicht auf die zweite Ausführungsform einer Federkomponente einer Gasdiffusionsschicht,
- FIG 7: eine Spirale, die Teil der zweiten Ausführungsform gemäß FIG 5 und FIG 6 ist,
- FIG 8: eine Seitenansicht auf eine dritte Ausführungsform einer Federkomponente einer Gasdiffusionsschicht, und
- FIG 9: eine perspektivische Darstellung dritten Ausführungsform einer Federkomponente einer Gasdiffusionsschicht.

Gleiche Bezugszeichen haben in den verschiedenen Figuren die gleiche Bedeutung.

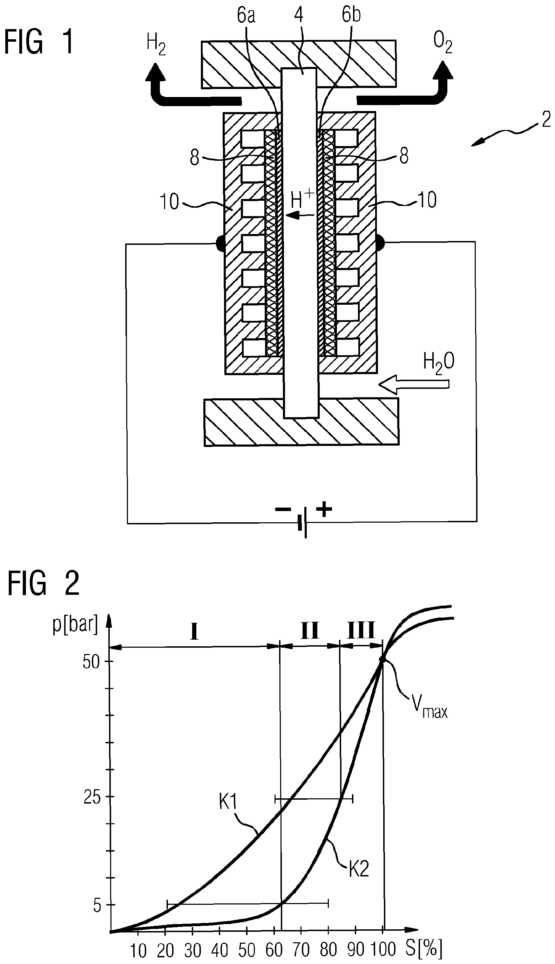

In FIG 1 ist schematisch der Aufbau einer PEM-Elektrolysezelle 2 gezeigt. Die PEM-Elektrolysezelle 2 ist Teil eines hier nicht näher gezeigten Elektrolyseurs zur Spaltung von Wasser durch elektrischen Strom zur Produktion von Wasserstoff und Sauerstoff.

Die PEM-Elektrolysezelle 2 umfasst einen Elektrolyt aus einer protonleitenden Membran 4 (Proton-Exchange-Membrane, PEM), auf welcher sich beidseitig die Elektroden 6a, 6b befinden. Die Einheit aus Membran und Elektroden wird als Membran-Elektroden-Einheit (MEA) bezeichnet. Mit 6a wird hierbei eine Kathode, und mit 6b eine Anode bezeichnet. An den Elektroden 6a, 6b liegt jeweils eine Gasdiffusionsschicht 8 an. Die Gasdiffusionsschichten 8 werden von sogenannten Bipolarplatten 10 kontaktiert, die im zusammengebauten Zustand eines Elektrolyse-Stacks aus mehreren einzelnen Elektrolysezellen 2 voneinander trennen.

Die PEM-Elektrolysezelle 2 wird mit Wasser gespeist, welches an der Anode 6b in Sauerstoff-Gas O₂ und Protonen H⁺ zerlegt wird. Die Protonen H⁺ wandern durch die Elektrolytmembran 4 in Richtung der Kathode 6a. Auf der Kathodenseite rekombinieren sie zu Wasserstoff-Gas H₂.

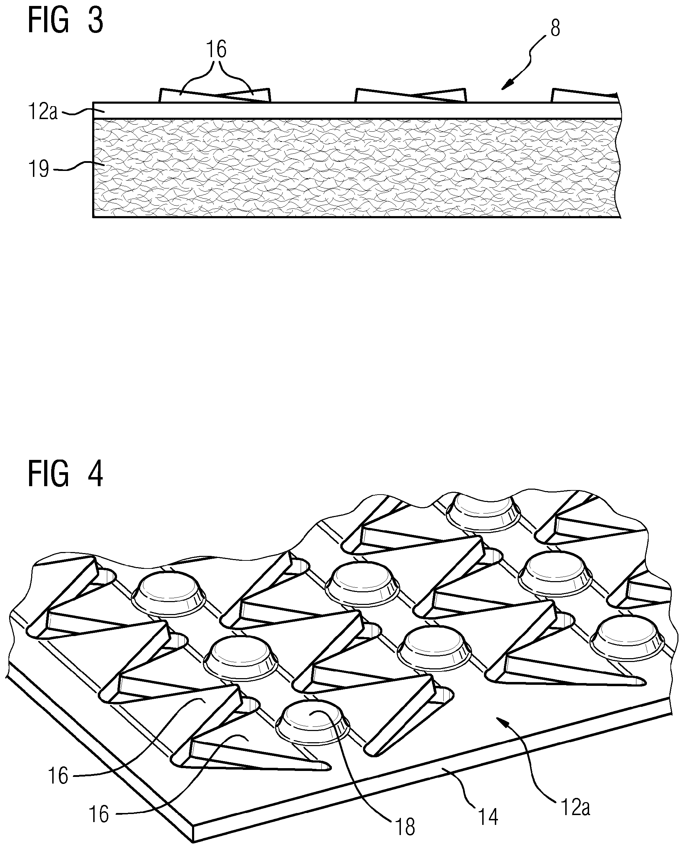

Durch die Gasdiffusionsschicht 8 werden eine optimale Verteilung des Wassers sowie der Abtransport der Produktgase sichergestellt. Die Gasdiffusionsschicht 8 dient zudem als Stromverteiler. Aus diesen Gründen ist die Gasdiffusionsschicht 8 aus einem elektrisch leitenden, porösen Material ausgebildet. Zudem werden durch die Gasdiffusionsschicht 8 im gezeigten Ausführungsbeispiel Bauteiltoleranzen, insbesondere die der anliegenden Bipolarplatten 10, ausgeglichen. Die Gasdiffusionsschicht 8 enthält daher übereinander geschichtete Lagen, wobei eine äußere Lage als eine Federkomponente 12a, 12b, 12c (siehe FIG 3 bis 9) ausgebildet ist, die eine progressive Federkennlinie aufweist. Die Gasdiffusionsschicht 8 umfasst insbesondere eine gezeigte Kontaktierungskomponente, eine Diffusionskomponente und die Federkomponente, die sich voneinander bezüglich ihrem Aufbau und/oder Zusammensetzung unterscheiden.

In FIG 2 sind zwei beispielhafte progressive Federkennlinien K1 und K2 dargestellt. Auf der x-Achse ist mit S der Federweg, und auf der y-Achse ist mit F die Federkraft gekennzeichnet. Wie aus FIG 2 ersichtlich, sind die Federkennlinien in drei Bereiche unterteilt. Eine maximale elastische Verformung Vₘₐₓ, die im gezeigten Ausführungsbeispiel bei ca. 50 bar liegt, stellt den Übergangspunkt zwischen dem elastischen und den plastischem Verlauf der Federkennlinie bzw. zwischen dem elastischen und den plastischem Verhalten der Feder dar. Rechts von der maximalen elastischen Verformung Vₘₐₓ (≙100%) erfolgt dabei eine rein plastische Verformung der Feder.

In einem ersten Bereich I verformt sich die Federkomponente bei einem relativen kleinen Anpressdruck bis zu 5 bar relativ stark, insbesondere liegt eine Verformung der Federkennlinie K1 zwischen 20% und 30% und der Federkennlinie K2 sogar bis über 60%.

In einem zweiten Bereich II bei einem Anpressdruck zwischen 5 bar und 25 bar ist liegt die Verformung der Federkomponente zwischen ca. 60% und ca. 90% bezogen auf die maximale elastische Verformung Vₘₐₓ.

Die Federkomponente ist zudem derart ausgestaltet, dass bei einem Anpressdruck von über 25 bar nur noch eine geringe Verformung stattfindet, so dass der Teil des normierten Federwegs S zwischen 60% und 100% für K1 und zwischen ca. 85% und 100% für K2 abgedeckt ist.

In FIG 3 und FIG 4 ist ein erstes Ausführungsbeispiel einer Gasdiffusionsschicht 8 mit einer Federkomponente 12a gezeigt. Sie umfasst ein Blech 14 mit an der Oberfläche ausgeschnitten, gebogenen Dreiecken 16, die dem Blech 14 sein federndes Verhalten verleihen. Das Federverhalten einer derartigen Federkomponente 12a ist progressiv, muss jedoch mechanisch begrenzt werden, um eine zu hohe plastische Verformung des Bleches 14 zu vermeiden. In diesem Fall geschieht dies durch Abstandshalter 18, die zwischen den Dreiecken 16 eingeprägt sind. Wie aus FIG 3 ersichtlich, umfasst die Gasdiffusionsschicht 8 zudem eine aus einem Vlies gebildeten Kontaktierungskomponente 19, die im zusammengebauten Zustand an einer Elektrode 6a, 6b anliegt.

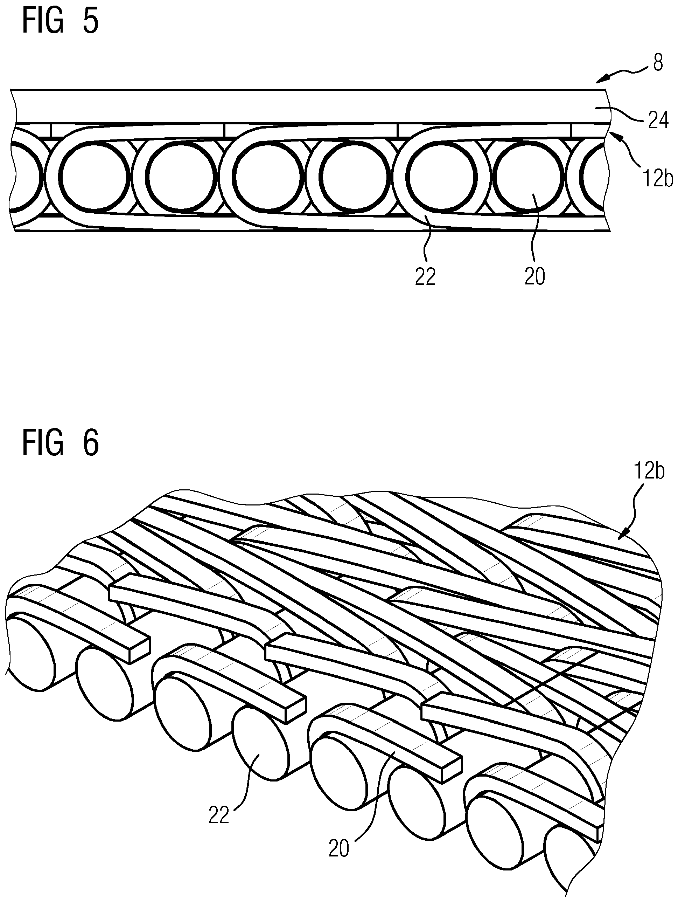

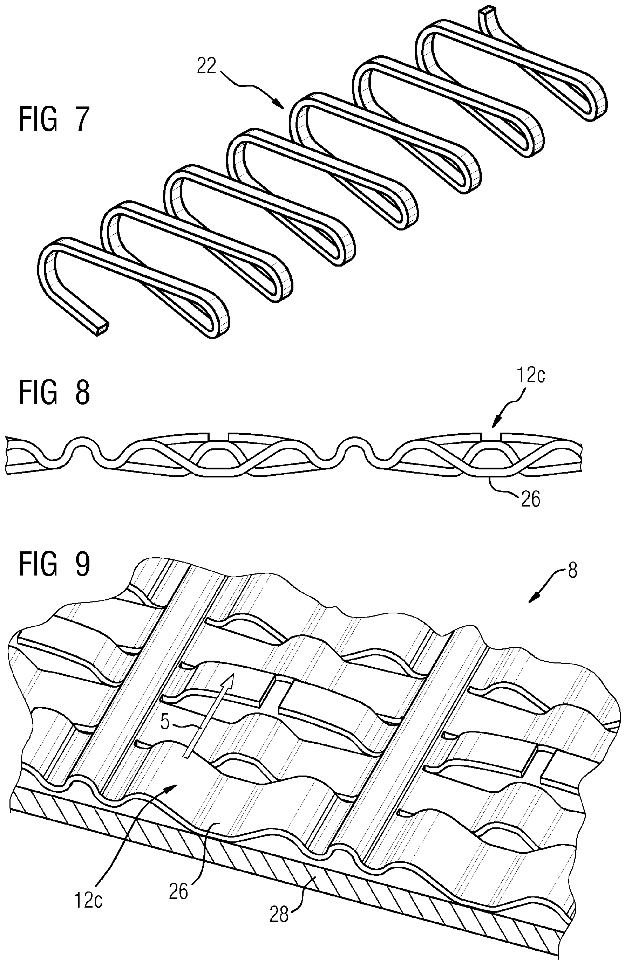

Aus FIG 5 und FIG 6 geht eine zweite Ausführungsform einer Gasdiffusionsschicht 8 mit einer weiteren Federkomponente 12b hervor. Die Federkomponente 12b umfasst hierbei ein Spiralgeflecht. Das Spiralgeflecht umfasst hintereinander angeordnete Querstäbe 20, um welche mehrere Spiralen 22 gewickelt sind. In FIG 7 ist zudem eine einzelne Spirale 22 dargestellt, die die Grundlage für die Federwirkung des Geflechts bildet. Das Spiralgeflecht 12b entsteht, wenn Spiralen 22 mit derselben Geometrie, aber unterschiedlicher Wicklungsrichtung abwechselnd ineinander geschoben und durch die Querstäbe 20 verbunden werden. Die Querstäbe 20 sind beispielsweise aus Kunststoff gefertigt. Die Spiralen 22 sind aus einem elektrisch leitfähigen Material wie z.B. Edelstahl, Titan, Niob, Tantal oder Nickel.

Aus FIG 5 ist zudem eine Decklage 24 ersichtlich, welche die Funktion einer Kontaktierungskomponente 19 der Gasdiffusionsschicht 8 übernimmt. Die Decklage 24 ist hierbei aus einer Schichtung aus Streckmetall oder aus anderen porösen und mechanisch stabilen Materialien gebildet. Denkbar sind z.B. auch ein Vlies auf einem Drahtgewebe, Metallschaum oder eine gesinterte Metallscheibe.

In FIG 8 und FIG 9 ist eine dritte Ausführungsform der Gasdiffusionsschicht 8 mit einer dritten Federkomponente 12c dargestellt. Die Federkomponente 12c ist hierbei nach Art eines Wellblechs mit abwechselnd gegensinniger Wellung ausgeprägt. Diese Form weist den wesentlichen Vorteil auf, dass gleichzeitig eine Führung der Strömung in die angezeigte Richtung S stattfindet. Die Federung erfolgt hierbei in drei Stufen progressiv steigend von einer sehr weichen Feder zu einem Anschlags-ähnlichen Verhalten (siehe FIG 2). Mit dem Bezugszeichen 26 sind in FIG 8 und FIG 9 Stellen gekennzeichnet, die an einem Streckmetall festgepunktet sind. Die schraffierte Fläche 28 in FIG 9 stellt dabei eine Decklage 24 bzw. Kontaktierungskomponente 19 dar, die zu einer der Elektroden 6a, 6b gerichtet ist.

Alle oben beschriebenen Federkomponenten 12a, 12b, 12c bzw. Gasdiffusionsschichten 8 weisen die Eigenschaft auf, dass sie entstehende Bauteiltoleranzen im Elektrolyseur ausgleichen, um eine gleichmäßige Kontaktierung der Membran-Elektroden-Einheit in jedem Toleranzfall zu ermöglichen. Auf Grund der progressiven Federkennlinie der Federkomponenten 12a, 12b, 12c wird im Überlastfall eine einseitig zu hohe Verformung der Gasdiffusionsschicht 8 verhindert. Bei allen Ausführungen ist zudem denkbar zwischen der Federkomponente 12a, 12b, 12c und der Kontaktierungskomponente 19, 24, 28 eine hier nicht näher gezeigte poröse Diffusionskomponente anzubringen.

## Patentansprüche

1. Gasdiffusionsschicht (8) zum Anbringen zwischen einer Bipolarplatte (10) und einer Elektrode (6a, 6b) einer PEM-Elektrolysezelle (2), umfassend mindestens zwei übereinander geschichtete Lagen, wobei eine äußere Lage als eine Federkomponente (12a, 12b, 12c) ausgebildet ist, die eine progressive Federkennlinie aufweist.

2. Gasdiffusionsschicht (8) nach Anspruch 1,
wobei die mindestens zwei übereinander geschichteten Lagen sich voneinander bezüglich ihres Aufbaus und/oder Zusammensetzung unterscheiden.

3. Gasdiffusionsschicht (8) nach Anspruch 1 oder 2,
umfassend drei Lagen: eine Kontaktierungskomponente (19, 24, 28), eine Diffusionskomponente und die Federkomponente (12a, 12b, 12c).

4. Gasdiffusionsschicht (8) nach einem der vorhergehenden Ansprüche,
wobei die Federkomponente (12a, 12b, 12c) derart ausgestaltet ist, dass die Federkennlinie in mindestens zwei, insbesondere drei Bereiche (I, II, III) mit unterschiedlichem Verlauf unterteilbar ist.

5. Gasdiffusionsschicht (8) nach einem der vorhergehenden Ansprüche,
wobei die Federkomponente (12a, 12b, 12c) derart ausgestaltet ist, dass bei einem Anpressdruck bis 5 bar eine Verformung der Federkomponente (12a, 12b, 12c) vorliegt, die bis 60%, insbesondere bis 80% bezogen auf eine maximale elastische Verformung beträgt.

6. Gasdiffusionsschicht (8) nach einem der vorhergehenden Ansprüche,
wobei die Federkomponente (12a, 12b, 12c) derart ausgestaltet ist, dass bei einem Anpressdruck zwischen 5 bar und 25 bar eine Verformung der Federkomponente (12a, 12b, 12c) vorliegt, die zwischen 60% und 90% bezogen auf eine maximale elastische Verformung beträgt.

7. Gasdiffusionsschicht (8) nach einem der vorhergehenden Ansprüche,
wobei die Federkomponente (12a, 12b, 12c) aus einem elektrisch leitfähigen Material gebildet ist, insbesondere aus Edelstahl, Titan, Niob, Tantal und/oder Nickel.

8. Gasdiffusionsschicht (8) nach einem der vorhergehenden Ansprüche,
wobei die Federkomponente (12a, 12b, 12c) nach Art eines profilierten Blechs (12a, 12c) ausgebildet ist.

9. Gasdiffusionsschicht (8) nach einem der vorhergehenden Ansprüche,
wobei die Federkomponente (12a, 12b, 12c) nach Art eines Geflechts (21b) ausgebildet ist.

10. Gasdiffusionsschicht (8) nach einem der vorhergehenden Ansprüche,
wobei die Federkomponente (12a, 12b, 12c) eine oder mehrere Spiralen (22) umfasst.

11. PEM-Elektrolysezelle (2) mit einer Gasdiffusionsschicht (8) nach einem der vorhergehenden Ansprüche.

12. Elektrolyseur mit einer PEM-Elektrolysezelle (2) nach Anspruch 11.

## Claims

1. Gas diffusion layer (8) to be arranged between a bipolar plate (10) and an electrode (6a, 6b) of a PEM electrolysis cell (2), comprising at least two layers layered one on top of another, wherein an outer layer is in the form of a spring component (12a, 12b, 12c) which has a progressive spring characteristic curve.

2. Gas diffusion layer (8) according to Claim 1, wherein the at least two layers layered one on top of another differ from one another in terms of their structure and/or composition.

3. Gas diffusion layer (8) according to Claim 1 or 2, comprising three layers: a contacting component (19, 24, 28), a diffusion component and the spring component (12a, 12b, 12c).

4. Gas diffusion layer (8) according to one of the preceding claims, wherein the spring component (12a, 12b, 12c) is configured in such a manner that the spring characteristic curve can be divided into at least two, in particular three, regions (I, II, III) of differing progression.

5. Gas diffusion layer (8) according to one of the preceding claims, wherein the spring component (12a, 12b, 12c) is configured in such a manner that, with a contact pressure of up to 5 bar, there is deformation of the spring component (12a, 12b, 12c) amounting to up to 60%, in particular up to 80%, with respect to a maximum elastic deformation.

6. Gas diffusion layer (8) according to one of the preceding claims, wherein the spring component (12a, 12b, 12c) is configured in such a manner that, with a contact pressure of between 5 bar and 25 bar, there is deformation of the spring component (12a, 12b, 12c) amounting to between 60% and 90% with respect to a maximum elastic deformation.

7. Gas diffusion layer (8) according to one of the preceding claims, wherein the spring component (12a, 12b, 12c) is formed from an electrically conductive material, in particular from high-grade steel, titanium, niobium, tantalum and/or nickel.

8. Gas diffusion layer (8) according to one of the preceding claims, wherein the spring component (12a, 12b, 12c) is formed in the manner of a profiled metal sheet (12a, 12c).

9. Gas diffusion layer (8) according to one of the preceding claims, wherein the spring component (12a, 12b, 12c) is formed in the manner of a mesh (21b).

10. Gas diffusion layer (8) according to one of the preceding claims, wherein the spring component (12a, 12b, 12c) comprises one or more spirals (22).

11. PEM electrolysis cell having a gas diffusion layer (8) according to one of the preceding claims.

12. Electrolyzer having a PEM electrolysis cell (2) according to Claim 11.

## Revendications

1. Couche (8) de diffusion de gaz à mettre entre une plaque (10) bipolaire et une électrode (6a, 6b) d'une cellule (2) d'électrolyse PEM, comprenant au moins deux strates l'une sur l'autre, une strate extérieure étant constituée sous la forme d'un élément (12a, 12b, 12c) à ressort, qui a une courbe caractéristique de ressort progressive.

2. Couche (8) de diffusion de gaz suivant la revendication 1,
dans laquelle les au moins deux strates superposées se distinguent l'une de l'autre par leur structure et/ou leur composition.

3. Couche (8) de diffusion de gaz suivant la revendication 1 ou 2,
comprenant trois strates : un élément (19, 24, 28) de mise en contact, un élément de diffusion et l'élément (12a, 12b, 12c) à ressort.

4. Couche (8) de diffusion de gaz suivant l'une des revendications précédentes,
dans laquelle l'élément (12a, 12b, 12c) à ressort est constitué de manière à pouvoir subdiviser la courbe caractéristique de ressort, en au moins deux, notamment trois parties (I, II, III), d'allure différente.

5. Couche (8) de diffusion de gaz suivant l'une des revendications précédentes,
dans laquelle l'élément (12a, 12b, 12c) à ressort est conformé de manière à avoir, pour une pression, qui s'y applique, allant jusqu'à 5 bar, une déformation de l'élément (12a, 12b, 12c) à ressort, qui représente jusqu'à 60%, notamment jusqu'à 80% rapporté à une déformation élastique maximum.

6. Couche (8) de diffusion de gaz suivant l'une des revendications précédentes,
dans laquelle l'élément (12a, 12b, 12c) à ressort est conformé de manière à voir s'il y a une pression d'application comprise entre 5 bar et 25 bar, si une déformation de l'élément (12a, 12b, 12c) à ressort, comprise entre 60% et 80%, rapportée à la déformation élastique maximum.

7. Couche (8) de diffusion de gaz suivant l'une des revendications précédentes,
dans laquelle l'élément (12a, 12b, 12c) à ressort est en un matériau conducteur de l'électricité, notamment en acier fin, en titane, en niobium, en tantale et/ou en nickel.

8. Couche (8) de diffusion de gaz suivant l'une des revendications précédentes,
dans laquelle l'élément (12a, 12b, 12c) à ressort est constitué à la manière d'une tôle (12a, 12c) profilée.

9. Couche (8) de diffusion de gaz suivant l'une des revendications précédentes,
dans laquelle l'élément (12a, 12b, 12c) à ressort est constitué à la manière d'un tissu (21b).

10. Couche (8) de diffusion de gaz suivant l'une des revendications précédentes, dans lequel l'élément (12a, 12b, 12c) à ressort comprend une ou plusieurs spirales (22).

11. Cellule (2) d'électrolyse PEM, ayant une couche (8) de diffusion de gaz suivant l'une des revendications précédentes.

12. Electrolyseur ayant une cellule (2) d'électrolyse PEM suivant la revendication 11.
